(19) Europäisches Patentamt

European Patent Office

Office européen des brevets

(11) EP 0 923 069 A1

(12) EUROPEAN PATENT APPLICATION

(43) Date of publication:
16.06.1999 Bulletin 1999/24

(51) Int Cl.⁶: G11B 5/704

(21) Application number: 98310028.0

(22) Date of filing: 08.12.1998

(84) Designated Contracting States:
AT BE CH CY DE DK ES FI FR GB GR IE IT LI LU MC NL PT SE
Designated Extension States:
AL LT LV MK RO SI

(30) Priority: 09.12.1997 JP 35400897

(71) Applicant: TDK Corporation
Chuo-ku, Tokyo (JP)

(72) Inventors:
• Kuwajima, Takayoshi
  Saku-shi, Nagano-ken (JP)
• Seki, Akihiko
  Saku-shi, Nagano-ken (JP)

(74) Representative: Rees, David Christopher et al
Kilburn & Strode
20 Red Lion Street
London WC1R 4PJ (GB)

(54) **Magnetic recording mediums**

(57) A magnetic recording medium comprising a nonmagnetic base, a nonmagnetic interlayer 0.5-2.5 µm thick formed on at least one side of the base, and a magnetic layer 0.05-0.5 µm thick formed on the interlayer, the magnetic layer consisting essentially of a ferromagnetic powder and a binder, characterized in that the interlayer contains a carbon black having a mean primary particle diameter of 25-40 nm, specific surface area of 50-80 m²/g, and DBP oil absorption of 40-55 cc/100 g.

**Description**

BACKGROUND OF THE INVENTION

1. Field of the invention

This invention relates to high-density magnetic recording mediums having a magnetic layer with a thickness from 0.05 to 0.5 μm and, more specifically, to magnetic recording mediums which have good surface roughness and combine excellent reliability with excellent electromagnetic conversion characteristics.

2. Prior art

In recent years there has been a tendency toward higher density recording on magnetic recording media, and development of systems with shorter recording wavelengths has been striking (e.g., the shortest recording wavelength thus far achieved with DDS-3 format, a data storage system, is in the order of 0.3 μm). The advent of such systems with shorter recording wavelengths has presented major problems with existing media having ordinary magnetic layers (about 1 to 5 μm thick), including thickness loss during recording and playback, output drop due to self-demagnetization, and deterioration of resolution. In digital recording, in particular, a recording method that involves overwriting originally recorded signals with new ones is in wide use, primarily for civilian or public systems. The more recent tendency toward still higher density of recording has called for not only shortening the recording wavelengths but also further improvements in overwrite characteristics and resolution to perform overwriting recording signals in a plurality of regions, e.g., RLL signals at a frequency ratio of 2:7, and achieve favorable overwriting of the signals having a plurality of recording wavelengths. Conventional coated magnetic recording media fail to meet these property requirements, although they have been improved to some extent in the magnetic properties (flux density, coercive force, etc.) and surface quality of the magnetic layer.

Effective means have hitherto been proposed for diminishing the deterioration of resolution, thickness loss, and self-demagnetization, and improving the output and overwrite properties. They are coated magnetic recording media of the type having a magnetic layer which uses ferromagnetic powder of high saturation magnetization, such as ferromagnetic metal powder, with remanent flux density kept above a certain level, and is as thin as 2 μm or less, or 1 μm or less. These recording media are disclosed and reported in the literature and in Japanese Patent Application Kokai Nos. 57-198536 and 62-154225 and elsewhere.

However, a magnetic layer formed directly over a nonmagnetic base becomes increasingly susceptible to the adverse effect of the nonmagnetic base surface as the layer thickness decreases. To be more concrete, a magnetic layer less than 1 μm thick reproduces on its surface the coarseness of the underlying nonmagnetic base surface. This aggravates the contact between the medium and the head for record-playback performance and, especially, lowers the output in the short wavelength region.

Ordinary magnetic layers contain, besides the ferromagnetic powder and binder, various other additives. They include a reinforcing agent (e.g., particles harder than the ferromagnetic powder, such as α-alumina) to enhance the mechanical strength of the magnetic layer surface, a conductive material (e.g., carbon black) that hampers dropouts and dust deposition, and a lubricant (e.g., a fatty acid or fatty ester) to enhance the reliability. A magnetic layer of 1 μm or less thickness accordingly contains smaller absolute quantities of the additives, and it can hardly prove effective compared to a magnetic layer more than 1 μm thick, with less durability and lower reliability of the medium. If the additive contents are increased to effective levels, the ferromagnetic powder percentage has to be reduced with a consequent decrease in the flux density of the magnetic layer and hence deterioration of the recording density and electromagnetic conversion characteristics.

One prior art approach to this problem is providing an interlayer (known also as coating substrate or undercoat) having specific functions between the magnetic layer and nonmagnetic base. Patent Application Kokai Nos. 60-35323 and 60-164926 disclose providing an interlayer which consists chiefly of carbon black and binder plus, where necessary, a lubricant. The prior inventions, with an intention to increase the proportion of ferromagnetic powder in the magnetic layer for higher density, decreases the binder, lubricant, conductive carbon black, and other additive contends in the layer and provides an interlayer having their functions instead. They claim that the interlayer ameliorates the adhesion between the magnetic layer and nonmagnetic base, the conductivity of the magnetic layer surface, and the reliability of the medium.

Nevertheless, in the absence of specifications for the properties of carbon black, the interlayer can cause various difficulties. Conductive carbon black, in particular, is difficult to disperse uniformly in the binder because of its specific surface area and oil absorption. Moreover, the resulting coating material has high thixotropic viscoelasticity inherent in the structure of the carbon black contained. It affects the leveling and smoothing of the coated surface unfavorably and tends to produce an interlayer with roughened surface. An attempt to abate the thixotropy by dilution of the coating material with a large volume of organic solvent or the like could again roughen the interlayer surface with pores and voids that result from the evaporation of the solvent upon coating.

Patent Application Kokoku No. 7-24101 teaches providing an interlayer which contains a carbon black having a dibutyl phthalate (DBP) oil absorption of 50 to 100 ml/100 g and a particle diameter of 0.013 to 0.040 μm. The carbon black is claimed to enhance the dispersibility of the interlayer, increase the surface smoothness of the layer and also that of the magnetic layer to overlie it, and thereby improve the electromagnetic conversion characteristics. The Kokoku No. 7-24101 does not specify the specific surface area of the carbon black, but its working examples refer to the use of carbon black having a specific surface area of not less than 100 $m^2$/g. The reference invention thus apparently pertains to a carbon black different from the carbon black having the specific surface area (50-80 $m^2$/g) according to the present invention. It is for that reason that, even when the carbon black with the particle size and DBP oil absorption specified in the Kokoku publication was used as in comparative examples (e.g., Comparative Example 2), troubles such as thickening or agglomeration occurred during the preparation of the interlayer coating material. The application of the coating material consequently produced streak lines, or the thixotropy that the material develops immediately before application caused thickening or other degradation during dwell period. These and other difficulties hampered the satisfaction of the surface smoothness requirement.

According to the Kokoku No. 7-24101, the ratio by weight of the pigment to the binder in the interlayer is 100: 85 (= about 1.2:1). The low pigment loading and high resin content presented the following problems.

A coated medium usually is improved in surface smoothness by a finish with a squeezing force applied to the medium surface by calender means or the like. The coated film to be calendered necessitates a rigid support like an interlayer. If the support is elastic it will spread the force applied and will return to the original state once the force is removed, resulting in incomplete finish. As long as the magnetic layer retains the conventional thickness (in the order of 1-5 μm) this phenomenon seldom occurs and is negligible. For example, the magnetic layers in the examples of the Kokoku No. 7-24101 have a thickness of 3 μm, and the above phenomenon is utterly disregarded. With 0.5 μm or thinner magnetic layers, on the other hand, the elasticity of the support is largely responsible for such a problem, compared to the conventional thicker layers. In the case of coated multilayer medium, an interlayer serves as a support for a thin magnetic layer. The interlayer with a low pigment loading and high resin content as provided by the Kokoku No. 7-24101 is more elastic than usual, and therefore a magnetic layer 0.05 to 0.5 μm thick is unable to achieve adequate surface smoothness after finish.

Patent Application Kokai No. 5-210838 reveals that certain limitations to the nonmagnetic base and addition of carbon black to the interlayer make it possible to adjust the hardness of the interlayer sufficiently to avoid calender roll contamination and print-through on the back side of the base. The combined use of the nonmagnetic base and interlayer helps solve the problems that arise from the calendering of mediums having a 1 μm or thinner magnetic layer. However, the recent trends toward higher density and higher capacity of recording have whittled the thickness of the nonmagnetic base too year after year. To make up for the loss of nonmagnetic base thickness, the traditional medium material of polyethylene terephthalate (PET) has been supplanted by polyethylene 2,6-naphthalate (PEN) or polyamide (PA) so as to attain the highest possible stiffness of the medium. However, the procedure for fabricating the base varies with materials, and the method of the Kokai No. 5-210838 is not appropriate yet. For example, polyamides have limitations to their fabrication, and the method of the reference invention is still inapplicable or involves much difficulties if applicable.

Patent Application Kokai No. 5-189751 discloses a medium having a magnetic layer not more than 1.0 μm thick and an interlayer containing carbon black. Since the medium contains a conductive polymer, there are obvious possibilities of deteriorated dispersibility and surface roughness.

BRIEF SUMMARY OF THE INVENTION

The present invention has for its object the provision of high-density magnetic recording mediums having a magnetic layer from 0.05 to 0.5 μm thick and which exhibit good surface roughness and combine excellent reliability with excellent electromagnetic conversion characteristics.

The invention provides magnetic recording mediums comprising a nonmagnetic base, a nonmagnetic interlayer 0.5-2.5 μm thick formed on at least one side of the base, and a magnetic layer 0.05-0.5 μm thick formed on the interlayer, the magnetic layer consisting essentially of a ferromagnetic powder and a binder, characterized in that the interlayer contains a carbon black having a mean primary particle diameter of 25-40 nm, specific surface area of 50-80 $m^2$/g, and DBP oil absorption of 40-55 cc/100 g.

DETAILED DESCRIPTION OF THE INVENTION

Conventionally the conductivity and adhesion of an interlayer have been enhanced by the use of a relatively small amount of a carbon black having a relatively large specific surface area, great DBP oil absorption, and small primary particle diameter. However, because of the structure with conductivity, the carbon black added in an amount relatively small and yet just large enough to prove effective imparts high thixotropic viscoelasticity to the resulting interlayer coating material, with adverse effects upon the surface properties of the interlayer. Unlike the usual concept, the present invention adopts carbon black of primary particle diameter with less unfavorable structural effect and positively allows the interlayer to contain such carbon black. In this way the invention has solved the foregoing problems of the prior art.

The present invention overcomes the difficulties of the prior art. It will now be described in more detail.

The film thickness of interlayer to be used desirably in the present invention ranges from 0.5 to 2.5 μm, more desirably from 0.8 to 2.0 μm, and still more desirably from 1.0 to 1.5 μm. A thickness of less than 0.5 μm allows the surface properties of the interlayer to deteriorate under the influence of filler in the nonmagnetic base. A thickness of more than 2.5 μm tends to form a coating film with uneven thickness and poor surface smoothness.

The interlayer for use in the invention contains a carbon black with:

| mean primary particle diameter | 25-40 nm; |
| specific surface area | 50-80 $m^2$/g; and |
| DBP oil absorption | 40-55 cc/100 g. |

The mean primary particle diameter is measured by direct observation under a transmission electron microscope.

The specific surface area is measured in the following manner. First, carbon black powder is deaerated by heat treatment at around 250°C for 30 to 60 minutes so as to drive off adsorbate from the powder. It is then placed into a measuring instrument, where it is subjected to measurement for adsorption with nitrogen at the liquid nitrogen temperature (-195°C). (The procedure is for determining a specific surface area by what is known as BET Equation, for which please refer to *J. Ame. Chem. Soc.,* **60**, 309 (1938).)

The DBP (dibutyl phthalate) oil adsorption is determined by the following method. 20.00 g of a sample (A) dried at 150±1°C for one hour is placed in a mixing chamber of an "Absorptometer" (manufactured by Brabender Inc. with a spring tension of 2.68 kg/cm). With limit switches preset to predetermined points (the limit switch settings being at about 70% of the maximum torque), rotary blades in the mixing chamber are driven (at 125 rpm). At the same time, the addition of DBP (sp. gr. 1.045-1.050) from an automatic buret is started at the rate of 4 ml/min. Close to the end point, the torque rapidly increases to shut off the limit switches. On the basis of the quantity of the DBP added to that point (B ml), the DBP oil absorption (D ml/100 g) is calculated from equation:

$$D = B/A \times 100.$$

Generally speaking, the smaller the mean primary particle diameter the better the surface smoothness; the smaller the specific surface area the better the dispersibility; and the larger the DBP oil absorption the better the conductivity. However, the mean primary particle diameter, specific surface area, and DBP oil absorption of carbon black are so closely correlated that there has been no magnetic recording medium that has an interlayer meeting all the requirements of coatability, physical properties, electromagnetic conversion characteristics, etc. The present invention permits meeting all the property requirements of the interlayer by confining the properties of carbon black within the aforementioned specific ranges.

When the magnetic recording medium is a tape, the amount of cupping varies with the kinds and quantities of materials that constitute the interlayer and the back coat. To secure the apparent strength of the tape, it is desirable that the tape has negative cupping (the magnetic side is convex) or positive cupping (the side opposite to the magnetic is convex). From the viewpoint of tape contact with the head, negative cupping is preferred. Ordinarily, a coated film containing carbon black easily shrinks itself to provide positive cupping. The carbon black according to the invention, by contrast, retards the interlayer shrinkage and helps reduce the overall shrinkage of the magnetic side of the tape.

The mean primary particle diameter of the carbon black for use in the invention desirably ranges from 25 to 40 nm. If the diameter is smaller than 25 nm the specific surface area is likely to be excessive and tends to develop thixotropic viscoelasticity during preparation and application of the resulting coating material. In addition, poor dispersibility tends to affect the surface smoothness of the interlayer adversely. Conversely if the diameter is larger than 40 nm the coarseness of the particles themselves can again deteriorate the surface smoothness of the interlayer.

The specific surface area of the carbon black according to the invention is desirably in the range of 50 to 80 $m^2$/g. If it is smaller than 50 $m^2$/g the primary particle diameter is likely to be too large, with consequent reduction of coating voids and less lubricant retention. If the area is larger than 80 $m^2$/g the quantity of resin necessary for dispersion increases and the pigment loading declines, and the carbon black no longer suits the purpose of the invention.

A DBP oil absorption of 40 to 55 cc/100 g is suitable for the carbon black of the invention. If the absorption is less than 40 cc/100 g the primary particle diameter usually is too large. Conversely if it is greater than 55 cc/100 g dense aggregation occurs, easily inducing thixotropy of the coating material and causing streaking or unevenness upon coating.

Typical carbon black products to be used in the invention include those commercially available under the trade names of "Raven 760B", "Raven 1060B" (both made by Columbian Carbon Co.) and "REGAL 250" (by Cabot Corp.).

The carbon black content in the coating composition according to the invention is optional within the range that permits the preparation of a coating material, but desirably is in the range of 15 to 75 wt% on the basis of the weight of the interlayer. If its proportion is less than 15 wt% inadequate conductivity tends to cause static charging of the medium. If it exceeds 75 wt% an insufficient binder proportion can result in frequent dusting of the coated film.

The interlayer for use in the invention may, where necessary, contain a nonmagnetic inorganic pigment as a means for increasing the pigment loading in the interlayer. The quantity to be contained, shape, size, material, surface treatment, etc. of the inorganic pigment may be chosen according to the necessity. Examples are $\alpha$-iron oxide (Mohs' hardness 6), titanium oxide (5.5), calcium carbonate (3), silicon oxide (7), $\alpha$-alumina (9), chromium oxide (9), silicon carbide (9.5), industrial diamond (10), aluminum nitride (9), and boron nitride (9.5). Out of these inorganic pigments, for the purposes of the invention, those having Mohs' hardness values of 7 or below are classified as "inorganic powders" and those above 7 as "abrasives" and will be respectively described below.

In the interlayer according to the invention, the ratio by weight of carbon black to an inorganic fine powder other than carbon black desirably ranges from 18/82 to 100/0, more desirably from 18/83 to 95/5. If there is no inorganic fine powder the dispersibility and surface roughness at their critical upper limits. The presence of inorganic fine powder is desirable to make allowances for those properties. However, if the weight ratio of the inorganic fine powder contained is larger than 82, the medium has such poor conductivity that it tends to be statically charged.

As for the shape, there is no particular limitation and the particles may have freely chosen shape, such as granular, acicular, planar, or spindle-shaped, granular or acicular being preferable.

A desirable size for the inorganic fine powder is, in the case of granular particles, a mean particle diameter of 0.01 to 0.05 $\mu$m, preferably 0.02 to 0.04 $\mu$m, and in the case of acicular particles, a mean length of 0.05 to 0.30 $\mu$m, preferably 0.10 to 0.20 $\mu$m. When the inorganic fine powder is granular in shape and has a mean particle diameter smaller than 0.1 $\mu$m or when an acicular inorganic fine powder has a mean length shorter than 0.5 $\mu$m, an increased specific surface area entails a larger resin content and hence lower dispersibility. When a granular inorganic fine powder has a mean particle diameter larger than 0.05 $\mu$m or an acicular powder has a mean length greater than 0.30 $\mu$m, the surface smoothness of the interlayer tends to be sacrificed. Desirable aspect ratios for granular and acicular particles are less than 1.5 and from 2.4 to 10, respectively. In either case the inorganic fine powder desirably has a Mohs' hardness below 7, more desirably between 3 and 7.

It is advisable that the inorganic fine powder is a synthetic product of regular particle size distribution. Such a product of $\alpha$-iron oxide or titanium oxide, especially the former, is to be desired. As regards the surface treatment of the inorganic fine powder, it is possible, when necessary, to treat it with an organic or inorganic system, e.g., to adjust its acid or base absorption or facilitate loosening and dispersion of secondary particles.

The interlayer according to the invention may if necessary contain one of the abovementioned inorganic pigments having a Mohs' hardness greater than 7 as an abrasive. An abrasive is to have a Mohs' hardness greater than 7, more desirably greater than 9. In respect of size, it desirably has a mean particle diameter of 0.05 to 0.5 $\mu$m, more desirably 0.1 to 0.3 $\mu$m. Particles finer than 0.05 $\mu$m in diameter scarcely come up to the surface, with a reduced beneficial effect of addition. Particles larger than 0.5 $\mu$m are likely to roughen the surface. For the same reasons the abrasive content desirably accounts for 3 to 20% of the weight of the interlayer.

It is advisable that the abrasive is a synthetic product of uniform particle size distribution. Dispersibility and ease of choice make $\alpha$-alumina and chromium oxide desirable, the former being more desirable.

The $\alpha$-alumina to be used may be spherical, cubic, or dice-shaped. When necessary, it may be surface treated with an organic or inorganic system, e.g., to adjust its acid or base absorption or facilitate loosening and dispersion of secondary particles.

The binder to be used in the present invention is a combination of thermoplastic, thermosetting or reactive, and electron-sensitive modified resins. A suitable combination may be chosen in conformity with the intended properties of the resulting medium and process conditions. Preferred are combinations of vinyl chloride copolymers and polyurethane resins as will be described below. Typical resins for use in the invention are vinyl chloride copolymers. Above all, those having a vinyl chloride content of 60 to 95 wt%, preferably 60 to 90 wt%, and a mean degree of polymerization of about 100 to 500 are desirable. For use in combination with such a vinyl chloride resin, a polyurethane resin is particularly effective because of its abrasion resistance and good adhesion to the base. Besides these resins, the binder may contain any of various other resins of known types.

It is also possible to use any of the above resins that has been modified for electron sensitivity by the introduction of (meth)acrylic double bonds. The electron functional group content in such a resin is 1 to 40 mol%, preferably 10 to 30 mol%, in the hydroxyl group ingredient, for the sake of stability during manufacture and of electron radiation curing property. In the case of a vinyl chloride copolymer, in particular, an electron radiation curing resin excellent in both dispersibility and curability can be obtained by reacting the monomers in such a way that it contains 1 to 20 functional groups, preferably 2 to 10 functional groups, per molecule.

When it is assumed, with an interlayer, that the total weight of the inorganic fine powder including the carbon black according to the invention is P and the weight of the binder is B, the relation between P and B is desirably P/B≥3.5, more desirably 8≥P/B≥4, still more desirably 6.5≥P/B≥4.5. If the P/B is less than 3.5, the increased proportion of the binder imparts elasticity to the interlayer, so that the interlayer is unsatisfactory in respect of surface roughness after calender finish. On the other hand, if it is more than 8, the adhesion between the interlayer and an adjoining layer or nonmagnetic base becomes inadequate. Moreover, the binder quantity is not large enough for pigment dispersion, and again unsatisfactory surface roughness can result from insufficient dispersion.

In case of necessity the interlayer of the invention may contain a lubricant as desired. Saturated or not, a fatty acid or ester, saccharide, or other known lubricant may be used singly or as a mixture of two or more. More desirable is the use of a mixture of two or more fatty acids or esters of different melting points. The mixture meets the requirement of continuously supplying the surface of a magnetic recording medium with a lubricant capable of serving in all the temperature environments where the medium is used.

Examples of the lubricants that can be suitably used are, among fatty acids, saturated linear ones such as stearic, palmitic, myristic, lauric, and erucic acids, and saturated branched ones such as isocetylic and isostearic acids, and unsaturated fatty acids such as oleic, linolic, and linoleic acids.

Useful esters include linear saturated fatty esters such as butyl stearate and butyl palmitate; branched saturated fatty esters such as isocetyl stearate and isostearyl stearate; unsaturated fatty esters such as isostearyl oleate; fatty esters of unsaturated alcohols such as oleyl stearate; esters of unsaturated fatty acids and unsaturated alcohols such as oleyl oleate; esters of dihydric alcohols such as ethylene glycol distearate; esters of dihydric alcohols and unsaturated fatty acids such as ethylene glycol monooleate, ethylene glycol dioleate, and neopentyl glycol dioleate; and esters of saccharides and saturated and unsaturated fatty acids such as sorbitan monostearate, sorbitan tristearate, sorbitan monooleate, and sorbitan trioleate.

The lubricant content in the interlayer may be suitably adjusted to suit the intended use. A desirable range accounts for from 1 to 20 wt% of the total weight of the mixture including inorganic fine powder and carbon black.

The interlayer must have a proper surface roughness (the term surface roughness as used herein represents the centerline average height measured in conformity with JIS B-0601 and designated Ra). The Ra immediately after the provision of an interlayer (without any treatment for finish) is not more than 15 nm, preferably not more than 11 nm, and more preferably not more than 10 nm. The Ra after finish as by calendering is not more than 6 nm, preferably not more than 5 nm, and more preferably not more than 4.5 nm. In practicing the coating methods as will be described later in which an interlayer and a magnetic layer in wet state are formed by coating either simultaneously or sequentially, it is advisable to form the interlayer alone by coating and confirm that its Ra falls within the specified range.

There is no particular limitation to the coating means for forming an interlayer, and a roll coater such as gravure rolls or reverse rolls, or a nozzle coater with an extrusion die or the like may be employed. For the coating of a magnetic layer, a nozzle coater with an extrusion die is recommended. These means are essential for simultaneous or sequential coating in wet state. The coating methods for forming both interlayer and magnetic layer are not particularly limited but may be freely chosen according to the need. One method comprises applying an interlayer first, drying and if necessary finishing, and then applying a magnetic layer over it (the method being known as sequential coating or wet-on-dry). Another method consists in forming an interlayer and, while it is still wet, applying a magnetic layer over it (wet sequential coating). Still another method forms both interlayer and magnetic layer at the same time as superposed layers (wet simultaneous coating). Sequential coating is preferred because it requires neither any consideration of the compatibility between the binders of the interlayer and magnetic layer coating compositions, the types and proportions of solvents used, nor any adjustment of the viscosities and other properties of the coating materials. The wet sequential coating and wet simultaneous coating are hereinafter collectively called wet-on-wet.

For the purposes of the invention, the magnetic layer to which the present invention is applicable has a film thickness of 0.05 to 0.5 $\mu$m. If the film thickness of the magnetic layer is less than 0.05 $\mu$m it is highly variable. If it exceeds 0.5 $\mu$m self-demagnetization and inadequate overwriting can occur during short wavelength recording, with concomitant deterioration of electromagnetic conversion characteristics.

Suitable ferromagnetic powders for use in the present invention are fine powders of metallic alloys or hexagonal plates.

Desirable metallic alloy fine powders are those with Hc 1500 to 3000 Oe, $\sigma$s 120 to 160 emu/g, mean length 0.05 to 0.2 $\mu$m, mean breadth 10 to 20 nm, and aspect ratio 1.2 to 20. The resulting medium is to have an Hc of 1500 to 3000 Oe. As additional elements, Ni, Zn, Co, Al, Si, Y, or rare earth may be added to suit the intended use.

Desirable hexagonal plate fine powders are those with Hc 1000 to 2000 Oe, $\sigma$s 50 to 70 emu/g, mean plate diameter 30 to 80 nm, and plate ratio 3 to 7. The resulting medium is to have an Hc of 1200 to 2200 Oe. Depending on the intended use, Ni, Co, Ti, Zn, Sn, or rare earth may be added as additional elements.

Other known materials may be employed without particular limitation for the intended use.

The invention will be described in detail below in connection with its examples and comparative examples.

In evaluating the products the following methods were used, and the results with the examples are shown in Table 1.

Table 1

| | | Interlayer composition | | | | | | Magnetic layer coating material | Interlayer coating material |
|---|---|---|---|---|---|---|---|---|---|
| | | Pigment ratio | | | Carbon black | | Total P/B | | |
| | | Inorganic fine powder | Carbon black | Particle diameter nm | Sp. surface area m2/g | DBP oil absorption cc/100g | | | |
| Example | 01 | — | 100 | 30 | 63 | 48 | 3.8 | A | a-1 |
| | 02 | 75 | 25 | 30 | 63 | 48 | 5.6 | A | b-1 |
| | 03 | 75 | 25 | 30 | 63 | 48 | 5.6 | A | b-1 |
| | 04 | 75 | 25 | 30 | 63 | 48 | 5.6 | A | b-1 |
| | 05 | 75 | 25 | 30 | 63 | 48 | 5.6 | A | b-1 |
| | 06 | 75 | 25 | 30 | 63 | 48 | 5.6 | A | b-1 |
| | 07 | 75 | 25 | 30 | 63 | 48 | 5.6 | A | b-1 |
| | 08 | 75 | 25 | 30 | 63 | 48 | 5.6 | A | b-1 |
| | 09 | 75 | 25 | 30 | 63 | 48 | 5.6 | A | b-2 |
| | 10 | 60 | 40 | 30 | 63 | 48 | 5.6 | A | b-3 |
| | 11 | 80 | 20 | 30 | 63 | 48 | 5.6 | A | b-4 |
| | 12 | 75 | 25 | 30 | 63 | 48 | 5.6 | B | b-1 |
| | 13 | 75 | 25 | 30 | 63 | 48 | 4.6 | B | c |
| | 14 | 75 | 25 | 30 | 63 | 48 | 6.0 | A | b-5 |
| | 15 | 75 | 25 | 30 | 66 | 50 | 5.6 | A | b-6 |
| Comp.Ex. | 01 | — | 100 | 30 | 63 | 48 | 2.5 | A | a-2 |
| | 02 | — | 100 | 21 | 122 | 66 | 3.8 | A | a-3 |
| | 03 | 100 | — | — | — | — | 5.6 | A | b-7 |
| | 04 | 75 | 25 | 30 | 63 | 48 | 5.6 | A | b-1 |
| | 05 | 75 | 25 | 30 | 63 | 48 | 5.6 | A | b-1 |
| | 06 | 75 | 25 | 24 | 125 | 46 | 5.6 | A | b-8 |
| | 07 | 75 | 25 | 21 | 122 | 66 | 5.6 | A | b-9 |
| | 08 | 75 | 25 | 40 | 60 | 62 | 5.6 | A | b-10 |
| | 09 | 75 | 25 | 16 | 250 | 76 | 5.6 | A | b-11 |
| | 10 | 75 | 25 | 41 | 42 | 121 | 5.6 | A | b-12 |
| | 11 | 75 | 25 | 28 | 93 | 74 | 5.6 | A | b-13 |
| | 12 | 75 | 25 | 20 | 200 | 115 | 5.6 | A | b-14 |
| | 13 | 75 | 25 | 80 | 24 | 28 | 5.6 | A | b-15 |
| | 14 | 75 | 25 | 16 | 250 | 76 | 5.6 | B | b-11 |
| Example | 16 | 75 | 25 | 30 | 63 | 48 | 5.6 | C | b-1 |
| Comp.Ex. | 15 | 75 | 25 | 21 | 122 | 66 | 5.6 | C | b-9 |
| Example | 17 | 75 | 25 | 30 | 63 | 48 | 5.6 | D | b-1 |
| | 18 | 75 | 25 | 30 | 63 | 48 | 5.6 | D | b-1 |
| Comp.Ex. | 16 | 75 | 25 | 21 | 122 | 66 | 5.6 | D | b-9 |
| | 17 | 75 | 25 | 21 | 122 | 66 | 5.6 | D | b-9 |
| Example | 19 | 75 | 25 | 30 | 63 | 48 | 5.6 | E | b-1 |
| Comp.Ex. | 18 | 75 | 25 | 21 | 122 | 66 | 5.6 | E | b-9 |

Table 1 (Continued)

| Results of evaluation | | | | | | | | |
|---|---|---|---|---|---|---|---|---|
| Surface roughness Ra | | Surface properties | Electromagnetic conversion char. | | Still properties | Electric resistance | Cupping | General evaluation |
| Magnetic layer | Interlayer | | Output | C/N | | | | |
| nm | nm | | dB | dB | Hrs | $\Omega$/sq | mm | |
| 4.5 | 5.5 | ○ | +0.0 | +0.0 | 12 | $1 \times 10^5$ | -0.3 | △ |
| 4.8 | 5.5 | ⊙ | +0.2 | +0.2 | 10 | $1 \times 10^8$ | -0.5 | △ |
| 4.3 | 4.5 | ○ | +1.0 | +0.3 | 20 | $5 \times 10^3$ | -0.5 | ○ |
| 3.8 | 3.8 | ○ | +1.2 | +0.4 | 20 | $1 \times 10^6$ | -0.4 | ○ |
| 3.8 | 4.0 | ○ | +1.0 | +0.3 | 16 | $1 \times 10^7$ | -0.3 | ○ |
| 3.6 | 4.0 | ○ | +0.5 | +0.2 | 18 | $1 \times 10^7$ | -0.3 | ○ |
| 3.8 | 3.8 | ○ | +1.2 | +0.2 | 20 | $1 \times 10^6$ | -0.4 | ○ |
| 3.2 | 3.3 | ○ | +0.8 | +0.0 | 16 | $1 \times 10^8$ | -0.4 | ○ |
| 3.5 | 3.5 | ○ | +1.2 | +0.5 | 20 | $1 \times 10^3$ | -0.4 | ○ |
| 4.0 | 4.0 | ○ | +1.0 | +0.3 | 20 | $1 \times 10^7$ | -0.4 | ○ |
| 3.7 | 3.7 | ○ | +1.2 | +0.4 | 20 | $5 \times 10^6$ | -0.2 | ○ |
| 3.5 | 3.8 | ○ | +0.8 | +0.2 | 18 | $1 \times 10^8$ | -0.3 | ○ |
| 4.0 | 4.1 | ○ | +0.5 | +0.1 | 18 | $1 \times 10^3$ | -0.2 | ○ |
| 4.3 | 4.8 | ○ | +0.5 | +0.0 | 12 | $1 \times 10^8$ | -0.3 | ○ |
| 3.8 | 3.9 | ○ | +1.0 | +0.5 | 20 | $1 \times 10^8$ | -0.4 | ○ |
| 5.2 | 5.5 | ○ | -1.0 | -2.0 | 15 | $1 \times 10^7$ | +0.0 | × |
| 7.5 | 11.0 | streaky | -5.3 | -6.3 | 15 | $1 \times 10^3$ | +0.5 | × |
| 3.5 | 3.5 | ○ | +1.0 | +0.2 | 15 | $1 \times 10^{11}$ | +0.5 | × |
| 5.0 | 6.0 | streaky | -0.2 | -1.2 | 8 | $6 \times 10^7$ | -0.4 | × |
| 5.0 | 5.0 | uneven | -0.3 | -1.0 | 20 | $1 \times 10^7$ | -0.3 | × |
| 5.1 | 7.5 | △ | -1.0 | -1.8 | 12 | $1 \times 10^6$ | +0.5 | × |
| 5.0 | 7.3 | △ | -0.8 | -1.6 | 12 | $1 \times 10^5$ | +0.5 | × |
| 4.9 | 6.5 | ○ | -0.3 | -1.1 | 12 | $1 \times 10^6$ | -0.1 | × |
| 5.1 | 7.0 | streaky | -1.0 | -1.9 | 8 | $1 \times 10^6$ | +0.5 | × |
| 4.8 | 6.8 | streaky | -0.8 | -1.3 | 7 | $1 \times 10^6$ | +0.5 | × |
| 4.7 | 6.5 | △ | -0.5 | -1.2 | 9 | $1 \times 10^7$ | +0.3 | × |
| 5.0 | 7.0 | streaky | -1.3 | -2.1 | 6 | $1 \times 10^6$ | +0.5 | × |
| 4.7 | 6.3 | uneven | -0.8 | -1.5 | 7 | $1 \times 10^{10}$ | +0.1 | × |
| 4.5 | 7.0 | streaky | -1.2 | -2.3 | 8 | $1 \times 10^6$ | +0.4 | × |
| 2.9 | 3.3 | ○ | +1.4 | +0.5 | 12 | $1 \times 10^6$ | — | ○ |
| 4.8 | 7.3 | △ | -0.2 | -1.0 | 12 | $1 \times 10^6$ | — | × |
| 3.0 | 3.3 | ○ | +1.0 | +1.0 | — | $1 \times 10^8$ | — | ○ |
| 3.2 | 3.3 | ○ | +4.0 | +3.5 | — | $1 \times 10^8$ | — | ○ |
| 4.8 | 7.3 | △ | -0.2 | -2.3 | — | $1 \times 10^8$ | — | × |
| 5.3 | 7.3 | △ | -1.9 | -4.2 | — | $1 \times 10^6$ | — | × |
| 4.3 | 4.0 | ○ | +4.0 | +3.5 | — | $1 \times 10^8$ | — | ○ |
| 5.3 | 7.3 | △ | +2.1 | +0.8 | — | $1 \times 10^6$ | — | × |

(1) Surface roughness Ra:

Measurements were made in conformity with the procedure of JIS B-0601. The measurement instrument employed was "Taylor-Hobson Talystep". The smaller the surface roughness Ra of a magnetic layer the better.

The measured roughness value is desirably not more than 6.0 nm, more desirably not more than 5.0 nm, and most desirably not more than 4.5 nm.

(2) Surface quality:

The surface quality was visually inspected. A surface without any stream or unevenness was rated "o", a surface having no unevenness but one streak or two was rated "Δ", and a surface having three or more streaks was designated "streaky", and a surface partially uneven was designated "uneven". A surface free of streak or irregularities was to be desired.

(3) Electromagnetic conversion characteristics:

Prior to testing, tape decks for measurements were remodelled according to the necessity so that they could record and reproduce signals of single waveforms.

**Examples 1-16 & Comparative Examples 1-15**

| Testing tape deck | "AJ-D750" made by Panasonic |
| Reference tape | "AJ-P63MP" by Panasonic |

(The measuring frequency was 21 MHz and the recording wavelength was 0.5 µm.)

**Examples 17-18 & Comparative Examples 16-17**

| Testing tape deck | "C1537" made by HP |
| Reference tape | "RSD-7095" by SONY |

(The measuring frequency was 13.5 MHz and the recording wavelength was 0.44 µm.)

**Example 19 & Comparative Example 18**

| Testing tape deck | "EV-S900" made by SONY |
| Reference tape | "Super-DC" by Fuji |

(The measuring frequency was 7 MHz and the recording wavelength was 0.5 µm.)

Here the term "output" is used to mean the reproduction output of a record of measuring frequency and single waveform of recording wavelength, as compared with the reference tape and indicated in terms of dB. A positive value compared to each of the respective reference tapes is to be desired. The term "C/N" represents a comparison between the noise around the measuring frequency and the carrier signal, indicated in dB. Again a positive value compared to each reference tape is desirable.

(4) Still:

The test decks were placed in environments of ordinary temperature and ordinary humidity or at 0°C, partly remodelled, driven to record signals in advance, set to stay still during playback, and the length of time until the signal strength dropped below 80% of that at the start of stillness was measured. The longer the time the better, and a period of over 10 hours was to be desired.

(5) Cupping:

The term "cupping" applies to a measurement of the height of a convex of either the magnetic side or back coat (BC) side of a tape sample set upside and kept stationary on a horizontal plane. When the back coat side is convex, it is represented by a positive cupping value, and when the magnetic side is convex, it is represented by a negative value. It is desirable that cupping is negative, or the magnetic side is convex, more desirably -0.1 mm to -1.0 mm, still more desirably -0.2 mm to -0.8 mm.

(6) Surface electrical resistance:

The surface electrical resistance of a magnetic side is represented by $\Omega$ and expressed in a unit of $\Omega$/sq. If

this value of a magnetic side is too low, it will have adverse effects upon the electromagnetic conversion characteristics. A too high value is undesirable either, since the magnetic side will attract dirt and dust while the tape runs. The surface electrical resistance of the magnetic side is desirably in the range from $5 \times 10^5$ to $1 \times 10^{10}$ $\Omega$/sq, more desirably from $5 \times 10^5$ to $5 \times 10^9$ $\Omega$/sq.

(7) General evaluation

General evaluation is such that, when the properties tested were better than the requirements a high rating of "o" is awarded, when they just meet the requirements a rating of "$\Delta$" is given, and when they fail to meet the requirements a rating of "$\times$" is given.

Example 1

Coating materials for interlayer, magnetic coat, and back coat were made in accordance with the following formulations:

```
1.  Interlayer coating material (a-1)

    Carbon black                            100 wt parts

    mean particle diameter 30 nm, BET specific surface area 63 m²/g, DBP oil absorption 48 cc/100 g, pH 7.4

        ["Raven 760B" made by Columbian Carbon Co.)

    α-Alumina (Mohs' hardness 9)             5 wt parts

    mean particle diameter 200 nm, BET specific surface area 9.5 m²/g

        ["HIT-50" made by Sumitomo Chemical Co.]

    Dispersant (phosphoric ester)            3 wt parts

        ["RE-610" made by Toho Chemical Co.]

    Electron radiation curing

        vinyl chloride resin [NV30%]        47 wt parts

    vinyl chloride-epoxy-containing monomer copolymer

    mean degree of polymerization :  310

    epoxy content                     :  3 wt%

    S content                         :  0.6 wt%

    acrylic content                   :  6/molecule

    Tg                                :  60°C

    Electron radiation curing

        polyurethane resin [NV35%]          40 wt parts
```

phosphorus compound-hydroxy-containing

polyester polyurethane

GPC                          :  Mn 26000

acrylic content             :  6/molecule

Tg                           :  -20°C

Methyl ethyl ketone              155 wt parts

Toluene                           90   "

Cyclohexanone                     60   "

(Total 500 wt parts)

These ingredients were mixed, dispersed by a sand grinder mill, and after the addition of the following composition, the whole mixture was further dispersed to obtain an interlayer coating material (a-1).

| | |
|---|---|
| Butyl stearate | 2 wt parts |
| Stearic acid | 1 wt parts |
| Methyl ethyl ketone | 73 wt parts |
| Toluene | 44 wt parts |
| Cyclohexanone | 30 wt parts |
| | (Total 650 wt parts) |

The coating methods used were wet-on-wet for Examples 12 and 13 and for Comparative Example 14 and wet-on-dry for the rest of Examples and Comparative Examples.

| 2. Magnetic coating material (A) | |
|---|---|
| Metallic magnetic powder | 100 wt parts |
| BET 50 m$^2$/g, Hc 2360 Oe, σs 143 emu/g, SFD 0.49, Co/Fe = 30 at%, length 0.10 μm, breadth 16 nm Dispersant (phosphoric ester) | 3 wt parts |
| ["RE-610" made by Toho Chemical Co.] | |
| Carbon black | 0.2 wt part |
| mean particle diameter 84 nm, BET 28 m$^2$/g, DBP oil absorption 84 ml/100 g, pH 7.0 | |
| ["#10B" made by Mitsubishi Chemical Co.] | |
| α-Alumina | 3 wt parts |
| mean particle diameter 130 nm, BET 21 m$^2$/g | |
| ["HIT-80" made by Sumitomo Chemical Co.] | |
| Vinyl chloride resin | 8 wt parts |
| ["MR-110" made by Nippon Zeon Co.] | |
| Polyester polyurethane resin [NV30%] | 16 wt parts |
| ["UR-8300" made by Toyobo Co.] | |
| Methyl ethyl ketone | 70 wt parts |
| Toluene | 70 wt parts |
| Cyclohexanone | 70 wt parts |
| | (Total 340 wt parts) |

The above ingredients were mixed, dispersed by a sand grinder mill, and, after the addition of the following

EP 0 923 069 A1

composition, the whole mixture was dispersed to obtain a magnetic coating material.

| Butyl stearate | 1 wt part |
|---|---|
| Stearic acid | 1 wt part |
| Methyl ethyl ketone | 95 wt part |
| Toluene | 95 wt part |
| Cyclohexanone | 268 wt part |
| | (Total 800 wt parts) |

Immediately before coating, "Coronate L" (solids 75%) of Nippon Polyurethane Industry Co. was added as a crosslinking agent to the magnetic coating material (A), in an amount of 33 wt% on the basis of the resin weight in the coating material.

| 3. Back coat coating material | |
|---|---|
| Carbon black | 100 wt parts |
| Dispersant | 2 wt parts |
| Abrasive [$\alpha$-iron oxide] | 5 wt parts |
| Nitrocellulose [NV70%] | 85 wt parts |
| Polyester polyurethane resin [NV30%] | 85 wt parts |
| Methyl ethyl ketone | 210 wt parts |
| Toluene | 240 wt parts |
| Cyclohexanone | 73 wt parts |
| | (Total 800 wt parts) |

The above ingredients were mixed, dispersed, and, after the addition of the following composition, the whole mixture was further dispersed to prepare a back coat coating material.

| Nitrocellulose [NV70%] | 20 wt parts |
|---|---|
| Polyester polyurethane resin [NV40%] | 27 wt parts |
| Methyl ethyl ketone | 420 wt parts |
| Toluene | 420 wt parts |
| Cyclohexanone | 113 wt parts |
| | (Total 1800 wt parts) |

(In all of the Examples this back coat coating material was applied. Throughout the Examples the final products had the same surface roughness Ra of 13.0 nm.)

Immediately before the application of the back coat coating material, "Coronate L" (solids 75%) of Nippon Polyurethane Industry Co. was added as a crosslinking agent in an amount of 27 wt% on the basis of the resin weight in the coating material.

The interlayer coating material (a-1) was applied to a 6.5 $\mu$m-thick dual type PET film (magnetic side Ra 5.0 nm, back side Ra 10 nm, Young's modulus MD/TD = 600/650) by a nozzle coater of an extrusion die type at a coating speed of 150 m/min. After drying, the coating was calendered and cured by exposure to electron radiation in an $N_2$ atmosphere. The magnetic coating material (A) was applied to the cured interlayer by an extrusion die type nozzle coater, subjected to magnetic orientation by a permanent magnet at 7000 G in a drying oven, and thus dried to provide a magnetic layer. The laminated sheet was calendered. Further, the back coat coating material was applied to the back side, dried, and the sheet was wound into a roll. In this way a film with a magnetic layer thickness of 0.20 $\mu$m, interlayer thickness of 1.0 $\mu$m, and back coat thickness of 0.5 $\mu$m was formed. The roll was allowed to stand for 24 hours or more, again allowed to stand at 60°C for 24 hours, allowed to cool down, and thereafter slitted into ribbons 6.35 mm wide as tape samples.

| Electron radiation condition | electron curtain type electron accelerator |
|---|---|
| Acceleration voltage | 200 keV |
| Electrode current | 40 mA |
| Absorbed dose | 4 Mrad |

(continued)

| Finish conditions | 4-nip calender |
|---|---|

with steel elastic rolls, temp. 60°C, line pressure 350 kg/cm, speed 150 m/m

Examples 2-8

```
Interlayer coating material (b-1)
        Inorganic fine powder [α-iron oxide]   75 wt parts
        mean length 0.15 μm, mean breadth 30 nm,
        specific surface area 53 m²/g, pH 5.9
                ["DPN-250BW" made by Toda Kogyo Corp.]
        Carbon black                            25 wt parts
        mean particle diameter 30 nm, BET specific surface
        area 63 m²/g, DBP oil absorption 48 cc/100 g, pH 7.4
                ["Raven 760B" made by Columbian Carbon Co.)
        α-Alumina (Mohs' hardness 9)             5 wt parts
        mean particle diameter 200 nm, BET specific surface
        area 9.5 m²/g
                ["HIT-50" made by Sumitomo Chemical Co.]
```

```
Dispersant (phosphoric ester)          3 wt parts

    ["RE-610" made by Toho Chemical Co.]

Electron radiation curing

    vinyl chloride resin [NV30%]     30 wt parts

vinyl chloride-epoxy-containing monomer copolymer

mean degree of polymerization :   310

epoxy content                   :   3 wt%

S content                       :   0.6 wt%

acrylic content                 :   6/molecule

Tg                              :   60°C

Electron radiation curing

    polyurethane resin [NV35%]      26 wt parts

phosphorus compound-hydroxy-containing

    polyester polyurethane

GPC                             :   Mn 26000

acrylic content                 :   6/molecule

Tg                              :   -20°C

Methyl ethyl ketone                  74 wt parts

Toluene                              74    "

Cyclohexanone                        48    "

                            (Total 360 wt parts)
```

These ingredients were mixed, dispersed by a sand grinder mill, and after the addition of the following composition, the whole mixture was further dispersed to obtain an interlayer coating material (b-1).

```
acrylic content              :   6/molecule

Tg                           :   -20°C

Methyl ethyl ketone                74 wt parts

Toluene                            74   "

Cyclohexanone                      48   "

                            (Total 360 wt parts)
```

[0026]

These ingredients were mixed, dispersed by a sand grinder mill, and after the addition of the following composition, the whole mixture was further dispersed to obtain an interlayer coating material (b-1).

| | |
|---|---|
| Butyl stearate | 1 wt part |
| Stearic acid | 1 wt part |
| Methyl ethyl ketone | 16 wt part |
| Toluene | 16 wt part |
| Cyclohexanone | 6 wt part |
| | (Total 400 wt parts) |

Using this interlayer coating material (b-1), tape samples were made in the same way as described in Example 1. The thickness of the interlayer and the type of base film were varied as follows:

```
               Film       Mate-   (Young's modu-    Interlayer
               thickness  rial     lus MD/TD)       thickness

Example 2      6.5 μm     PET     (600/650)kg/mm²     0.6 μm

    "      3   6.5         "      (    "    )         1.0
```

```
Dispersant (phosphoric ester)              1 wt part

      ["RE-610" made by Toho Chemical Co.]

Electron radiation curing

      vinyl chloride resin [NV30%]      10 wt parts

vinyl chloride-epoxy-containing monomer copolymer

mean degree of polymerization :   310

epoxy content                  :   3 wt%

S content                      :   0.6 wt%

acrylic content                :   6/molecule

Tg                             :   60°C

Electron radiation curing

      polyurethane resin [NV35%]        9 wt parts

phosphorus compound-hydroxy-containing

      polyester polyurethane

GPC                            :   Mn 26000

acrylic content                :   6/molecule

Tg                             :   -20°C

Methyl ethyl ketone                  32 wt parts

Toluene                              32   "

Cyclohexanone                        21   "

                        (Total 130 wt parts)
```

The above ingredients were mixed, dispersed by a sand grinder mill, and a carbon black coating material was obtained.

```
Interlayer coating material (b-2)

      Inorganic fine powder [α-iron oxide]  75 wt parts
```

```
          polyester polyurethane

GPC                          :  Mn 26000

acrylic content              :  6/molecule

Tg                           :  -20°C

Methyl ethyl ketone                   32 wt parts

Toluene                               32   "

Cyclohexanone                         21   "

                          (Total 130 wt parts)
```

[0028]

[0071]  The above ingredients were mixed, dispersed by a sand grinder mill, and a carbon black coating material was obtained.

```
Interlayer coating material (b-2)

    Inorganic fine powder [α-iron oxide]   75 wt parts

    mean length 0.15 μm, mean breadth 30 nm,

    specific surface area 53 m²/g, pH 5.9

        ["DPN-250BW" made by Toda Kogyo Corp.]

    α-Alumina (Mohs' hardness 9)            5 wt parts

    mean particle diameter 200 nm, BET 9.5 m²/g

        ["HIT-50" made by Sumitomo Chemical Co.]

    Dispersant (phosphoric ester)           2 wt parts

        ["RE-610" made by Toho Chemical Co.]

    Electron radiation curing

        vinyl chloride resin [NV30%]       20 wt parts

    vinyl chloride-epoxy-containing monomer copolymer

    mean degree of polymerization :   310
```

```
epoxy content                         :   3 wt%

S content                             :   0.6 wt%

acrylic content                       :   6/molecule

Tg                                    :   60°C

Electron radiation curing

        polyurethane resin [NV35%]        17 wt parts

phosphorus compound-hydroxy-containing

        polyester polyurethane

GPC                                   :   Mn 26000

acrylic content                       :   6/molecule

Tg                                    :   -20°C

Methyl ethyl ketone                       50  wt parts

Toluene                                   50   "

Cyclohexanone                             31   "

                                      (Total 250 wt parts)
```

[0029]

These ingredients were mixed, dispersed by a sand grinder mill, it was mixed with the carbon black coating material prepared in advance, and the whole mixture was further dispersed.

| Carbon black coating material | 130 wt parts |
|---|---|
| | (Total 380 wt parts) |

The following ingredients were then added and dispersed altogether to form an interlayer coating material (b-2).

```
        Butyl stearate                          1 wt part



        Inorganic fine powder
              /carbon black

Example 10          60/40          interlayer coating material
                                                    (b-3)
Example 11          80/20          interlayer coating material
                                                    (b-4)
```

Example 12

Magnetic coating material (B)

| | |
|---|---|
| Metallic magnetic powder | 100 wt parts |
| BET 50 m²/g, Hc 2360 Oe, σs 143 emu/g, SFD 0.49, Co/Fe = 30 at%, length 0.10 µm, breadth 16 nm | |
| Dispersant (phosphoric ester) | 3 wt parts |
| ["RE-610" made by Toho Chemical Co.] | |
| Carbon black | 0.2 wt part |
| mean particle diameter 84 nm, BET 28 m²/g, DBP oil absorption 84 ml/100 g, pH 7.0 | |
| ["#10B" made by Mitsubishi Chemical Co.] | |
| α-Alumina | 5 wt parts |
| mean particle diameter 130 nm, BET 21 m²/g | |
| ["HIT-80" made by Sumitomo Chemical Co.] | |
| Vinyl chloride resin | 8 wt parts |
| ["MR-110" made by Nippon Zeon Co.] | |
| Polyester polyurethane resin [NV30%] | 16 wt parts |
| ["UR-8300" made by Toyobo Co.] | |
| Methyl ethyl ketone | 70 wt parts |
| Toluene | 70 wt parts |
| Cyclohexanone | 70 wt parts |
| | (Total 342 wt parts) |

The above ingredients were mixed, dispersed by a sand grinder mill, and, after the addition of the following composition, the whole mixture was dispersed to obtain a magnetic coating material.

| | |
|---|---|
| Butyl stearate | 1 wt part |
| Stearic acid | 1 wt part |
| Methyl ethyl ketone | 188 wt part |
| Toluene | 188 wt part |
| Cyclohexanone | 82 wt part |
| | (Total 802 wt parts) |

Immediately before coating, "Coronate L" (solids 75%) of Nippon Polyurethane Industry Co. was added as a crosslinking agent to the magnetic coating material (B), in an amount of 33 wt% on the basis of the resin weight in the coating material.

Using this magnetic coating material (B), the interlayer coating material (b-1) of Example 7, and the base film of Example 4, an interlayer was formed by coating at a coating speed of 150 m/min by means of an extrusion die nozzle coater so that the dry thickness of the layer would be 1.4 µm. While the layer was still wet, the magnetic coating material was applied by an extrusion die nozzle coater to a dry thickness of 0.20 µm. After orientation, drying, calendering, and exposure to electron radiation, the laminate was coated with the back coat coating material to form a back coat with a dry thickness of 0.5 µm. The product was wound into a roll. Tape samples were obtained in the manner described in Example 4.

Example 13

Interlayer coating material (c)

| | |
|---|---|
| Inorganic fine powder [α-iron oxide] | 75 wt parts |
| mean length 0.15 µm, mean breadth 30 nm, | |
| specific surface area 53 m²/g, pH 5.9 | |
| ["DPN-250BW" made by Toda Kogyo Corp.] | |
| Carbon black | 25 wt parts |

(continued)

| | |
|---|---|
| mean particle diameter 30 nm, BET specific surface area 63 m²/g, DBP oil absorption 48 cc/100 g, pH 7.4 | |
| ["Raven 760B" made by Columbian Carbon Co.) | |
| α-Alumina (Mohs' hardness 9) | 5 wt parts |
| mean particle diameter 200 nm, BET specific surface area 9.5 m²/g | |
| ["HIT-50" made by Sumitomo Chemical Co.] | |
| Dispersant (phosphoric ester) | 3 wt parts |
| ["RE-610" made by Toho Chemical Co.] | |
| Vinyl chloride resin | 9 wt parts |
| ["MR-110" made by Nippon Zeon Co.] | |
| Polyester polyurethane resin [NV30%] | 30 wt parts |
| ["UR-8300" made by Toyobo Co.] | |
| Methyl ethyl ketone | 81 wt parts |
| Toluene | 81 wt parts |
| Cyclohexanone | 51 wt parts |
| | (Total 360 wt parts) |

The above ingredients were mixed, dispersed by a sand grinder mill, and, after the addition of the following composition, the whole mixture was dispersed to obtain an interlayer coating material.

| | |
|---|---|
| Butyl stearate | 1 wt part |
| Stearic acid | 1 wt part |
| Methyl ethyl ketone | 16 wt part |
| Toluene | 16 wt part |
| Cyclohexanone | 6 wt part |
| | (Total 400 wt parts) |

Immediately before coating, "Coronate L" (solids 75%) of Nippon Polyurethane Industry Co. was added as a crosslinking agent to the interlayer coating material, in an amount of 27 wt% on the basis of the resin weight in the coating material.

Using this interlayer coating material (c) and the magnetic coating material (B) of Example 12, tape samples were obtained in the same manner as described in Example 12 with the exception that the electron radiation was omitted.

Example 14

In the interlayer coating material (b-1) of Example 4, the resin amounts were changed as follows and the resulting interlayer coating material (b-5) was used to obtain tape samples like those of Example 4.

| | |
|---|---|
| Electron radiation curing vinyl chloride resin [NV30%] | 27 wt parts |
| Electron radiation curing polyurethane resin [NV35%] | 23 wt parts |

Example 15

In the interlayer coating material (b-1) of Example 4, the carbon black was changed to the following, and the resulting interlayer coating material (b-6) was used to obtain tape samples like those of Example 4.
mean particle diameter 30 nm, BET specific surface area 66 m²/g, DBP oil absorption 50 cc/100 g, pH 2.4
["Raven 1060B" made by Columbian Carbon Co.)

Comparative Example 1

In the interlayer coating material (a-1) of Example 1, the resin amounts were changed as follows and the resulting interlayer coating material (a-2) was used to obtain tape samples like those of Example 1.

| | |
|---|---|
| Electron radiation curing vinyl chloride resin [NV30%] | 67 wt parts |
| Electron radiation curing polyurethane resin [NV35%] | 57 wt parts |

Comparative Example 2

In the interlayer coating material (a-1) of Example 1, the carbon black was changed to the following, and the resulting interlayer coating material (a-3) was used to obtain tape samples like those of Example 1.
mean particle diameter 21 nm, BET specific surface area 122 $m^2$/g, DBP oil absorption 66 cc/100 g, pH 2.5 ["Raven 1255B" made by Columbian Carbon Co.)

Comparative Example 3

In the interlayer coating material (b-1) of Example 4, the inorganic fine powder content was changed to 100 parts by weight and the carbon black content to 0 part by weight, and the resulting interlayer coating material (b-7) was used to obtain tape samples like Example 4.

Comparative Examples 4-5

The thickness of the interlayer was changed as follows, and then tape samples were obtained in the manner described in Example 4.

| Interlayer thickness | |
|---|---|
| Comparative Example 4 | 0.4 μm |
| Comparative Example 5 | 2.8 |

Comparative Examples 6-13

In the interlayer coating material (b-1) of Example 4, the type of carbon black was changed as follows, and the resulting interlayer coating materials were used to obtain tape samples as in Example 4.

| | |
|---|---|
| Comparative Example 6 | Interlayer coating material (b-8): mean particle diameter 24 nm, BET specific surface area 124 $m^2$/g, DBP oil absorption 46 cc/100 g, pH 8.0 ["#45B" by Mitsubishi Chemical Co.] |
| Comparative Example 7 | Interlayer coating material (b-9): mean particle diameter 21 nm, BET specific surface area 122 $m^2$/g, DBP oil absorption 66 cc/100 g, pH 2.5 ["Raven 1255B" by Columbian Carbon Co.] |
| Comparative Example 8 | Interlayer coating material (b-10): mean particle diameter 40 nm, BET specific surface area 60 $m^2$/g, DBP oil absorption 62 cc/100 g, pH 8.0 ["CF9B" by Mitsubishi Chemical Co.] |
| Comparative Example 9 | Interlayer coating material (b-11) : mean particle diameter 16 nm, BET specific surface area 250 $m^2$/g, DBP oil absorption 76 cc/100 g, pH 8.0 ["#950B" by Mitsubishi Chemical Co.] |
| Comparative Example 10 | Interlayer coating material (b-12): mean particle diameter 41 nm, BET specific surface area 42 $m^2$/g, DBP oil absorption 121 |

cc/100 g, pH 7.5

["Black Pearls 280" by Cabot Corp.]

Comparative Example 11    Interlayer coating material (b-13):

mean particle diameter 28 nm, BET specific surface area 93 $m^2/g$, DBP oil absorption 74 cc/100 g, pH 8.0

["#33B" by Mitsubishi Chemical Co.]

Comparative Example 12    Interlayer coating material (b-14):

mean particle diameter 20 nm, BET specific surface area 200 $m^2/g$, DBP oil absorption 115 cc/100 g, pH 7.0

["Conductex SC" by Columbian Carbon Co.]

Comparative Example 13    Interlayer coating material (b-15)

mean particle diameter 80 nm, BET specific surface area 24 $m^2/g$, DBP oil absorption 28 cc/100 g

["Asahi Thermal" by Asahi Carbon Co.]

Comparative Example 14

Except for the use of the interlayer coating material of Comparative Example 9, the procedure of Example 12 was repeated to obtain similar tape samples.

Example 16

Magnetic coating material (C)

| | |
|---|---|
| Metallic magnetic powder<br>BET 48 $m^2/g$, Hc 2370 Oe, as 155 emu/g, SFD 0.44,<br>Co/Fe = 30 at%, length 0.10 μm, breadth 16 nm | 100 wt parts |
| Dispersant (phosphoric ester)<br>  ["RE-610" made by Toho Chemical Co.] | 3 wt parts |
| Carbon black<br>mean particle diameter 84 nm, BET 28 $m^2/g$, DBP oil absorption 84 ml/100 g, pH 7.0<br>  ["#10B" made by Mitsubishi Chemical Co.] | 0.2 wt part |
| α-Alumina<br>mean particle diameter 130 nm, BET 21 $m^2/g$<br>  ["HIT-80" made by Sumitomo Chemical Co.] | 5 wt parts |
| Vinyl chloride resin<br>  ["MR-110" made by Nippon Zeon Co.] | 8 wt parts |
| Polyester polyurethane resin [NV30%]<br>  ["UR-8300" made by Toyobo Co.] | 16 wt parts |
| Methyl ethyl ketone | 70 wt parts |
| Toluene | 70 wt parts |
| Cyclohexanone | 70 wt parts |
| | (Total 342 wt parts) |

The above ingredients were mixed, dispersed by a sand grinder mill, and, after the addition of the following composition, the whole mixture was dispersed to obtain a magnetic coating material.

| | |
|---|---|
| Butyl stearate | 1 wt part |
| Stearic acid | 1 wt part |
| Methyl ethyl ketone | 188 wt part |
| Toluene | 188 wt part |
| Cyclohexanone | 82 wt part |
| | (Total 802 wt parts) |

Immediately before coating, "Coronate L" (solids 75%) of Nippon Polyurethane Industry Co. was added as a crosslinking agent to the magnetic coating material, in an amount of 33 wt% on the basis of the resin weight in the coating material.

Using this magnetic coating material (C), the interlayer coating material (b-1) of Example 4, and the following PEN film, tape samples similar to those of Example 4 were obtained with a magnetic layer thickness of 0.12 μm and interlayer thickness of 1.3 μm.

Film thickness Material (Young's modulus MD/TD)

| Example 16 | 5.2 μm | PEN (600/1100) kg/mm$^2$ |
|---|---|---|

Comparative Example 15

The interlayer coating material of Comparative Example 7 was used but otherwise the procedure of Example 16 was followed to make tape samples.

Examples 17-18

Magnetic coating material (D)

| Metallic magnetic powder | 100 wt parts |
|---|---|
| BET 50 m$^2$/g, Hc 2360 Oe, σs 143 emu/g, SFD 0.49, Co/Fe = 30 at%, length 0.10 μm, breadth 16 nm | |
| Dispersant (phosphoric ester)     ["RE-610" made by Toho Chemical Co.] | 3 wt parts |
| α-Alumina mean particle diameter 130 nm, BET 21 m$^2$/g     ["HIT-80" made by Sumitomo Chemical Co.] | 10 wt parts |
| Vinyl chloride resin     ["MR-110" made by Nippon Zeon Co.] | 8 wt parts |
| Polyester polyurethane resin [NV30%]     ["UR-8300" made by Toyobo Co.] | 16 wt parts |
| Methyl ethyl ketone | 70 wt parts |
| Toluene | 70 wt parts |
| Cyclohexanone | 70 wt parts |
| | (Total 342 wt parts) |

The above ingredients were mixed, dispersed by a sand grinder mill, and, after the addition of the following composition, the whole mixture was dispersed to obtain a magnetic coating material.

| Butyl stearate | 1 wt part |
|---|---|
| Stearic acid | 1 wt part |
| Methyl ethyl ketone | 188 wt part |
| Toluene | 188 wt part |
| Cyclohexanone | 82 wt part |
| | (Total 802 wt parts) |

Immediately before coating, "Coronate L" (solids 75%) of Nippon Polyurethane Industry Co. was added as a crosslinking agent to the magnetic coating material, in an amount of 33 wt% on the basis of the resin weight in the coating material.

Using this magnetic coating material (D), the interlayer coating material (b-1) of Example 4, and the following polyamide films, tape samples similar to those of Example 4 were obtained except that the magnetic layer thickness and interlayer thickness were changed as follows and the slit width was changed to 3.8 mm.

|  | Film thickness | Material | (Young's modulus MD/TD) | Mag.layer thickness | Interlayer thickness |
|---|---|---|---|---|---|
| Example 17 | 4.5 μm | polyamide | (1100/1500)kg/mm$^2$ | 0.12 μm | 1.4 μm |
| Example 18 | 4.5 μm | polyamide | (1100/1500(kg/mm$^2$ | 0.08 μm | 1.4 μm |

Comparative Example 16

The interlayer coating material of Comparative Example 7 was used but otherwise the procedure of Example 17 was followed to obtain tape samples.

Comparative Example 17

The interlayer coating material of Comparative Example 7 was used but otherwise the procedure of Example 18 was followed to obtain tape samples.

Example 19

Magnetic coating material (E)

| | |
|---|---|
| Metallic magnetic powder<br>BET 52 m$^2$/g, Hc 2200 Oe, σs 145 emu/g, SFD 0.59,<br>Co/Fe = 30 at%, length 0.09 μm, breadth 16 nm | 100 wt parts |
| Dispersant (phosphoric ester)<br>    ["RE-610" made by Toho Chemical Co.] | 3 wt parts |
| Carbon black<br>mean particle diameter 84 nm, BET 28 m$^2$/g, DBP oil<br>absorption 84 ml/100 g, pH 7.0<br>    ["#10B" made by Mitsubishi Chemical Co.] | 0.2 wt part |
| α-Alumina<br>mean particle diameter 130 nm, BET 21 m$^2$/g<br>    ["HIT-80" made by Sumitomo Chemical Co.] | 10 wt parts |
| Vinyl chloride resin<br>    ["MR-110" made by Nippon Zeon Co.] | 8 wt parts |
| Polyester polyurethane resin [NV30%]<br>    ["UR-8300" made by Toyobo Co.] | 16 wt parts |
| Methyl ethyl ketone | 70 wt parts |
| Toluene | 70 wt parts |
| Cyclohexanone | 70 wt parts |
| | (Total 342 wt parts) |

The above ingredients were mixed, dispersed by a sand grinder mill, and, after the addition of the following composition, the whole mixture was dispersed to obtain a magnetic coating material.

| | |
|---|---|
| Butyl stearate | 1 wt part |
| Stearic acid | 1 wt part |
| Methyl ethyl ketone | 188 wt part |
| Toluene | 188 wt part |
| Cyclohexanone | 82 wt part |
| | (Total 802 wt parts) |

Immediately before coating, "Coronate L" (solids 75%) of Nippon Polyurethane Industry Co. was added as a crosslinking agent to the magnetic coating material, in an amount of 33 wt% on the basis of the resin weight in the coating material.

Using this magnetic coating material (E), the interlayer coating material (b-1) of Example 4, and the following PET film, tape samples similar to those of Example 4 were obtained with a magnetic layer thickness of 0.25 μm and interlayer thickness of 1.4 μm, and slit width of 8 mm.

| Film thickness Material (Young's modulus MD/TD) | | |
|---|---|---|
| Example 19 | 8.3 μm | PET (650/450) kg/mm$^2$ |

Comparative Example 18

The interlayer coating material of Comparative Example 7 was used but otherwise the procedure of Example 19 was repeated to make tape samples.

It will be understood from the results of evaluation summarized in Table 1 that, compared to conventional counterparts in Comparative Examples, the magnetic recording mediums embodied in Examples of the invention are well balanced in performance, having equivalent or better still properties and superior conductivity and electromagnetic conversion characteristics with negative cupping.

**Claims**

1. A magnetic recording medium comprising a nonmagnetic base, a nonmagnetic interlayer of a thickness ranging from 0.5 to 2.5 μm formed on at least one side of the base, and a magnetic layer of a thickness from 0.05 to 0.5 μm formed on the interlayer, said magnetic layer consisting essentially of a ferromagnetic powder and a binder, characterized in that the interlayer contains a carbon black having a mean primary particle diameter of 25 to 40 nm, specific surface area of 50 to 80 m$^2$/g, and dibutyl phthalate (DBP) oil absorption of 40 to 55 cc/100 g.

2. The magnetic recording medium according to claim 1, wherein the interlayer contains, in addition to the carbon black, a nonmagnetic inorganic fine powder other than carbon black.

3. The magnetic recording medium according to claim 2, wherein the ratio by weight of the carbon black to the nonmagnetic inorganic fine powder other than carbon black is in the range from 18/82 to 100/0.

4. The magnetic recording medium according to any of claims 1 to 3, wherein the interlayer contains a binder and, assuming that the total weight of the nonmagnetic inorganic fine powder including the carbon black is P and the weight of the binder is B, the following relation holds between P and B:

$$6.5 \geq P/B \geq 3.5.$$

EP 0 923 069 A1

| | | | |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 730 265 A (TDK CORP) 4 September 1996<br>* claims 1-4 *<br>* column 6, line 18 - line 30 *<br>* examples 1,19 * | 1-3 | G11B5/704 |
| X | EP 0 623 918 A (TDK CORP) 9 November 1994<br>* page 2, line 37 - page 3, line 15 *<br>* page 5, line 39 - line 49 *<br>* page 20, line 15 - line 27 *<br>* example 44; table 5 *<br>* example 65; table 7 * | 1-4 | |

TECHNICAL FIELDS
SEARCHED (Int.Cl.6)

G11B

The present search report has been drawn up for all claims

| Place of search | Date of completion of the search | Examiner |
|---|---|---|
| THE HAGUE | 23 March 1999 | Klocke, S |

European Patent Office

EUROPEAN SEARCH REPORT

Application Number

EP 98 31 0028

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

27

## ANNEX TO THE EUROPEAN SEARCH REPORT
## ON EUROPEAN PATENT APPLICATION NO.

EP 98 31 0028

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-1999

| Patent document cited in search report | | Publication date | Patent family member(s) | | Publication date |
|---|---|---|---|---|---|
| EP 0730265 | A | 04-09-1996 | JP | 8241515 A | 17-09-1996 |
| | | | US | 5792548 A | 11-08-1998 |
| EP 0623918 | A | 09-11-1994 | JP | 6259752 A | 16-09-1994 |
| | | | JP | 6259751 A | 16-09-1994 |
| | | | JP | 6111280 A | 22-04-1994 |
| | | | JP | 6111281 A | 22-04-1994 |
| | | | WO | 9408336 A | 14-04-1994 |
| | | | US | 5698286 A | 16-12-1997 |

EPO FORM P0459

For more details about this annex : see Official Journal of the European Patent Office, No. 12/82